# EUROPÄISCHE PATENTSCHRIFT

(11) **EP 3 491 357 B1**
(45) Veröffentlichungstag und Bekanntmachung des Hinweises auf die Patenterteilung: **29.03.2023**
(21) Anmeldenummer: 17752025.1
(22) Anmeldetag: 24.07.2017
(51) Int. Cl.: G01L 5/16, G01L 1/26

(54) **TEMPERATURMANAGEMENT FÜR EINE KRAFTMESSEINRICHTUNG**
TEMPERATURE MANAGEMENT FOR A FORCE MEASURING DEVICE
GESTION DE LA TEMPÉRATURE POUR UN SYSTÈME DE MESURE DE FORCE

(30) Priorität: 01.08.2016 DE 102016114207
(43) Veröffentlichungstag der Anmeldung: 05.06.2019
(73) Patentinhaber: Nuton GmbH, 10179 Berlin (DE)
(72) Erfinder: DE MENDOZA, Adrián González, 10965 Berlin (DE)
(74) Vertreter: Patentanwälte Bauer Vorberg Kayser
(86) Internationale Anmeldenummer: PCT/EP2017/068581
(87) Internationale Veröffentlichungsnummer: WO 2018/024520

(56) Entgegenhaltungen:
- EP-A2- 2 642 270
- GB-A- 1 374 789
- JP-A- H0 351 732
- US-A1- 2002 073 786
- US-A1- 2014 245 838
- US-A1- 2015 033 875
- US-A1- 2015 160 081

## Beschreibung

### Technisches Gebiet

Die Erfindung betrifft eine Einrichtung zur Verringerung der Temperaturempfindlichkeit bei Kraftmesseinrichtungen zur ein- oder mehrachsigen Erfassung einwirkender Kräfte und Momente. Derartige Kraftmesseinrichtungen werden in der Fertigungstechnik, der Robotik und für Mess- und Prüfstände verwendet.

### Hintergrund der Erfindung

Kraftmesseinrichtungen zur ein- oder mehrachsigen Erfassung einwirkender Kräfte und Momente besitzen häufig einen Aufbau, bei dem ein erster flanschartiger Teil über eine zwischenliegende Verformungszone mit einem zweiten flanschartigen Teil verbunden ist.

Solche Kraftmesseinrichtungen sind beispielsweise aus der US 2015/160081 A1 und der US 2014/245838 A1 bekannt. Aus der US2014/245838 A1 ist ein Radbetätigungskraftsensor bekannt, der eine Komponentenkrafterfassungseinheit mit einer Brückenschaltung aufweist, die pro Komponentenkraft mindestens vier Dehnungsmessstreifen enthält, die auf einer Umfangsfläche des Rohrs eines Erfassungskörpers vorgesehen sind.

Die zwischen den beiden flanschartigen Teilen wirkenden Kräfte führen zu Verformungen der Verformungszone. Diese Verformungen werden von Verformungsaufnehmern erfasst, welche im Bereich der Verformungszone angeordnet sind. Mit derartigen Verformungsaufnehmern lassen sich sehr kleine Längenänderungen des Trägermaterials erfassen. Solche Längenänderungen treten aber nicht nur aufgrund der einwirkenden Kräfte auf, sondern auch als Folge von Temperaturänderungen. Es wird deshalb von den Herstellern im Interesse einer geringen Messunsicherheit empfohlen, die Umgebungstemperaturen möglichst konstant auf einem vorgegebenen Niveau von meist 20°C zu halten, wenn die in den technischen Spezifikationen angegebene Messunsicherheit der Kraftmesseinrichtung erreicht werden soll. Diese Vorgaben lassen sich bei vielen technischen Anwendungen jedoch nicht einhalten, weder hinsichtlich des Temperaturniveaus noch der Temperaturkonstanz.

Im Weiteren ist gelegentlich von axialen und radialen Kraftwirkungen die Rede. Dies hat seine Ursache darin, dass viele der bekannten technischen Kraftmesseinrichtungen einen näherungsweise zylindrischen Aufbau besitzen und die Stirnseiten dieses Zylinders üblicherweise die beiden Anschlussflächen bilden, über die die Kräfte ein- beziehungsweise ausgeleitet werden. Die Rotationsachse dieses Zylinders ist hier die Bezugsachse. Sie wird mit der Z-Richtung gleichgesetzt. Allgemeiner ausgedrückt ist die hier gemeinte Achse die Abstandsrichtung zwischen den zwei üblicherweise parallelen Anschlussflächen einer solchen Kraftmesseinrichtung und steht lotrecht auf denselben.

Die Verformungszone stellt gewöhnlich innerhalb der Kraftmesseinrichtung den Bereich des größten Wärmewiderstands zwischen den beiden Anschlussflächen der Kraftmesseinrichtung dar, dementsprechend ist in diesem Bereich auch der Temperaturunterschiedswert pro Längeneinheit am höchsten. Der Temperaturgradient verläuft dabei vorzugsweise in axialer Richtung.

Während sich wärmebedingte Verformungen der Verformungszone in radialer Richtung durch eine zweckmäßige Anordnung von Verformungsaufnehmern meist gut kompensieren lassen, sind wärmebedingte Verformungen in axialer Richtung nicht oder nur unvollständig kompensierbar. Folgende Wärmequellen sind denkbar:
- Temperaturunterschiede zwischen den Anschlussflächen der Kraftmesseinrichtung, bedingt beispielsweise durch angeschlossene wärmeerzeugende Aggregate, wie z.B. Motoren.
- Erwärmungen der Verformungszone aufgrund innerer Reibung bei hochdynamischen Anwendungen
- Einseitig einstrahlende Wärme von einer äußeren Quelle, z.B. aufgrund von Sonneneinstrahlung
- Erwärmungen der Verformungszone aufgrund der elektrischen Verlustleistung der aufgebrachten Verformungsaufnehmer

Besonders die zuletzt genannte Erwärmung der Verformungszone aufgrund der elektrischen Verlustleistung aufgebrachter Verformungsaufnehmer ist von besonderer Bedeutung. Einerseits haben alle gängigen Kraftmesseinrichtungen ein thermisches Einschwingverhalten. Dies führt nach dem ersten Einschalten der Kraftmesseinrichtung zu einer Nullpunktdrift in der Z-Achse. Ein thermisch ausreichend stabiler Zustand stellt sich oft erst nach vielen Minuten ein. Ändern sich darüber hinaus während der Nutzungszeit der Kraftmesseinrichtung die Verhältnisse der Wärmeabfuhr, wandert der Nullpunkt in unvorhersehbarerer Weise.

Wird eine Kraftmesseinrichtung mit einer besonders hohen Empfindlichkeit benötigt und verwendet man Dehnmessstreifen als Verformungsaufnehmer, ist es vorteilhaft, die Dehnmessstreifen mit einer hohen Speisespannung zu betreiben. Eine hohe Speisespannung erhöht aber auch den Wärmeeintrag in die Verformungszone und somit die Messunsicherheit und die Zeit bis zum Erreichen eines thermisch stabilen Zustands.

### Stand der Technik

Die Wärmeabfuhr bei bestehenden Kraftmesseinrichtungen ist in der Regel auf die Verwendung gut wärmeleitfähiger Materialien beschränkt. Der Temperaturgradient unter den Messwertgebern wurde durch die Verkleinerung der Verformungsaufnehmer optimiert, außerdem gibt es einen Trend zur Verringerung der Speisespannung und zur Erhöhung der Widerstandswerte bei Dehnmessstreifen, welche ebenfalls zu einer Verringerung der Verlustleistung führen. Bestehende Kraftmesseinrichtungen weisen jedoch nach dem Kenntnisstand des Anmelders keine vergleichbaren Systeme zur Wärmeübertragung oder aktiven Temperierung auf.

Aus der JP H03 51732 ist weiterhin eine Kraftmesseinheit bekannt, die eine Verformungszone aufweist, an der Verformungsaufnehmer angeordnet sind. Angrenzend an die Verformungszone ist ein flüssigkeitsgefüllter Hohlraum ausgebildet, wobei die Flüssigkeit einem Wärmetransport zwischen Boden- und Deckelflansch der Kraftmesseinheit dient.

### Darstellung der Erfindung

Die Aufgabe der vorliegenden Erfindung ist es, die Temperaturempfindlichkeit und die Messunsicherheit derartiger Kraftmesseinrichtungen zu verringern. Dabei liegt ein besonderer Fokus auf der Abfuhr der Verlustleistung aus den Verformungsaufnehmern, um die thermische Einschwingzeit zu verringern und/oder höhere Speisespannungen zu ermöglichen.

Die Aufgabe wird gelöst durch eine Kraftmesseinrichtung gemäß Anspruch 1. Vorteilhafte Ausführungsformen dieser Kraftmesseinrichtung ergeben sich aus den Unteransprüchen 2-8.

Die Aufgabe wird dabei gelöst, indem eine erfindungsgemäße ringförmige Kraftmesseinrichtung eine Verformungszone aufweist, welche mindestens teilweise mit einer Flüssigkeit in flächigem Kontakt steht. Dabei ist die Kraftmesseinrichtung dazu ausgebildet, über die Flüssigkeit Wärme von der Verformungszone abzuführen. Wenigstens von der Verformungszone kann so Wärme abgeführt werden, um die zuvor genannten Nachteile zu vermeiden.

Neben einer Flüssigkeit als solcher sollen im Rahmen der vorliegenden Erfindung auch zähe oder pastöse Medien wie beispielsweise Wärmeleitpasten können zur Anwendung kommen. Auch fließfähige Granulate oder sonstige Medien aus einer Vielzahl von Einzelpartikeln sind als Flüssigkeit im Sinne der Erfindung zu bezeichnen. Der Begriff "Flüssigkeit" ist für die vorliegende Erfindung daher in seinem weitesten Sinn auszulegen.

Neben der Verformungszone steht die Flüssigkeit mit beiden flanschartigen Teilen in Kontakt, um so eine thermische Verbindung zwischen dem ersten flanschartigen Teil und dem zweiten flanschartigen Teil herzustellen.

Die Flüssigkeit steht somit mit beiden flanschartigen Teilen der Kraftmesseinrichtung in thermischen Kontakt. Bei Kontakt der Flüssigkeit mit einem flanschartigen Teil kann nicht nur Wärme direkt von der Verformungszone in dieses flanschartige Teil abfließen, sondern Wärme fließt auch auf einem parallelen zweiten Weg von der Verformungszone über die Flüssigkeit in diesen flanschartigen Teil. Dies erfolgt durch Konvektion und/oder Wärmeleitung der Flüssigkeit. So wird der Wärmewiderstand des direkten Weges zwischen der Verformungszone und dem jeweiligen flanschartigen Teil vorteilhaft verringert gegenüber Lösungen ohne Wärmeabfuhr durch eine Flüssigkeit.

Stehen beide flanschartigen Teile darüber hinaus durch die Flüssigkeit miteinander in thermischen Kontakt, wird die Verformungszone von der Aufgabe entlastet, den Wärmetransport zwischen den beiden flanschartigen Teilen allein zu bewältigen. Der Gesamtwärmewiderstand zwischen diesen beiden Elementen wird ebenfalls vorteilhaft herabsetzt gegenüber Lösungen ohne Wärmeabfuhr durch eine Flüssigkeit. Dies ist insbesondere dann von Bedeutung, wenn zwischen den flanschartigen Teilen aufgrund äußerer Einflüsse große Temperaturdifferenzen und/oder schnelle Temperaturänderungen zu erwarten sind. Durch diese Maßnahmen verringern sich das Temperaturniveau und der Temperaturunterschiedswert pro Längeneinheit im Bereich der Verformungszone, was zu einer geringeren Messunsicherheit führt. Gleichzeitig verringert sich die erforderliche Zeit für das thermische Einschwingen.

Zweckmäßigerweise ist dabei vorgesehen, dass die Vorrichtung Mittel zur Kühlung der Flüssigkeit aufweist, um Wärme abführen zu können. Beispielsweise kann die Flüssigkeit hierzu in Berührung mit einem Wärmekoppelelement stehen, über das Wärme von der Flüssigkeit abführbar ist. Dieses Wärmekoppelelement kann beispielsweise ein Wärmerohr sein.

Alternativ oder ergänzend kann die Flüssigkeit von einer externen Temperiereinrichtung temperiert und umgewälzt werden. Die Flüssigkeit kann auch von einer Kühlmittelleitung durchzogen sein, und das darin fließende Kühlmittel wird von einer externen Temperiereinrichtung temperiert und umgewälzt.

In einer Ausführungsform der Erfindung dient die äußere Fläche der rohrartigen Verformungszone als Applikationsfläche für Verformungsaufnehmer und die der äußeren Applikationsfläche gegenüberliegende innere Wand der rohrartigen Verformungszone ist mit einer Flüssigkeit beaufschlagt.

Die vorliegende Erfindung umfasst ferner den Gedanken, das Temperaturniveau und die Temperaturunterschiedswerte zwischen den beiden flanschartigen Teilen und ggf. auch der Verformungszone kontinuierlich mittels Temperatursensoren in der Kraftmesseinrichtung zu erfassen und das Temperaturniveau, den Temperaturunterschiedswert und den zeitlichen Verlauf der Temperaturänderung aufgrund von Erfahrungswerten für eine Kompensation von Messwertfehlern heranzuziehen. Weiterhin kann die Erfassung dieser Temperaturen für eine gezielte Temperierung des Sensors genutzt werden, mit dem Ziel, ein vorgegebenes Temperaturniveau zu halten und/oder den Unterschiedswert so gering wie möglich zu halten.

In einer Ausführungsform der Erfindung besitzt die Kraftmesseinrichtung daher in ihrem ersten flanschartigen Teil und in ihrem zweiten flanschartigen Teil jeweils mindestens einen Temperatursensor, und der von einer Auswerteeinheit ermittelte Temperaturunterschiedswert wird für eine Korrektur der ermittelten Kraftwerte und/oder zur Steuerung einer die Kraftmesseinrichtung oder Teile davon temperierenden Vorrichtung herangezogen.

### Bezugszeichenliste

- 1: Erster flanschartiger Teil
- 2: Zweiter flanschartiger Teil
- 3: (Rohrartige) Verformungszone
- 4: Verformungsaufnehmer (Dehnmessstreifen)
- 5: Applikationsfläche
- 6: Messkörper
- 7: Mittelachse
- 8: Nutartiger Einstich
- 9: Flüssigkeit
- 10: Anschlussfläche oben
- 11: Anschlussfläche unten
- 12: Temperatursensor oben
- 13: Temperatursensor unten
- 14: Flexibler Dichtring oben
- 15: Dichtring unten
- 16: Wärmekoppelelement
- 17: Kühlmittelleitung
- 18: Kühlmittelzufluss
- 19: Kühlmittelabfluss
- 20: Innenwand
- 21: Wärmerohr
- 22: Dichtstopfen

### Figurenbeschreibung

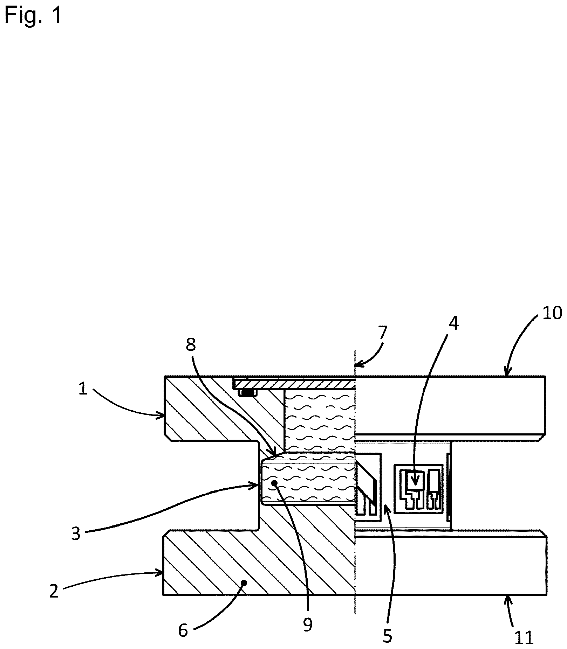

Figur 1 zeigt einen Halbschnitt einer nicht erfindungsgemäßen Kraftmesseinrichtung mit einem Messkörper 6, welcher funktionell in einen ersten flanschartigen Teil 1, einen zweiten flanschartigen Teil 2 und eine zwischenliegende Verformungszone 3 eingeteilt wird. Die Verformungszone 3 ist dabei rohrartig ausgeführt. Die äußere Zylinderfläche dieses Rohres ist nach oben und unten verlängert und bildet die Applikationsfläche 5 für die Verformungsaufnehmer 4. Diese sind im gezeigten Beispiel als Dehnmessstreifen ausgeführt. Der Messkörper 6 bildet hinter der rohrartigen Verformungszone 3 einen Hohlraum aus, welches mit einer vorzugsweise niedrigviskosem Flüssigkeit 9 mit einer hohen Wärmekapazität gefüllt ist, zum Beispiel Wasser. Dieses kann zur Erhöhung der Korrosionsbeständigkeit und/ oder zur Herabsetzung der Erstarrungstemperatur mit einem Additiv versehen sein. Die Flüssigkeit bringt in dieser Darstellung die Innenseite der rohrartigen Verformungszone 3 mit Flächen in thermischen Kontakt, welche sowohl dem ersten flanschartigen Teil 1 als auch dem zweiten flanschartigen Teil 2 zugeordnet sind. Die Wärmeübertragung findet in diesem Beispiel in erster Linie auf der Basis von freier Konvektion statt. Diese Anordnung ermöglicht eine effektive Wärmeabfuhr der von den Verformungsaufnehmern 4 abgegebenen Wärme und ermöglicht so höhere Speisespannungen und ein rascheres thermisches Einschwingen. Das Wasserreservoir dient gleichzeitig als Wärmepuffer, welches die Temperaturänderungsgeschwindigkeit aufgrund einer auf die Anschlussflächen 10 oder 11 einwirkenden Wärmequelle oder Wärmesenke reduziert und so die Messunsicherheit der Kraftmesseinrichtung unter diesen Bedingungen verringert. Gleichzeitig führt die Flüssigkeitsfüllung auch zu einem Ausgleich von Wärmeunterschieden quer zur Mittelachse 7 der Kraftmesseinrichtung. Ein Beispiel für eine solche Wärmequelle könnte ein benachbartes heißes Aggregat sein oder eine einseitige Sonneneinstrahlung.

In dieser Darstellung ist der Hohlraum mit der Flüssigkeit 9 nach oben dicht abgeschlossen. Um jedoch einen Druckausgleich zwischen der umgebenden Atmosphäre und der Flüssigkeit zu ermöglichen, weist die Hohlraumabdeckung entsprechend einer vorteilhaften Ausführungsform der Erfindung an mindestens einer Stelle eine (nicht dargestellte) elastische Membran oder ein vergleichbares Bauelement auf, die einen Flüssigkeitsaustritt verhindert, aber einen Druckausgleich ermöglicht. Könnte ein solcher Druckausgleich nicht erfolgen, würde die Druckdifferenz zu einer erhöhten Messunsicherheit bei variablen Umgebungsdrücken führen.

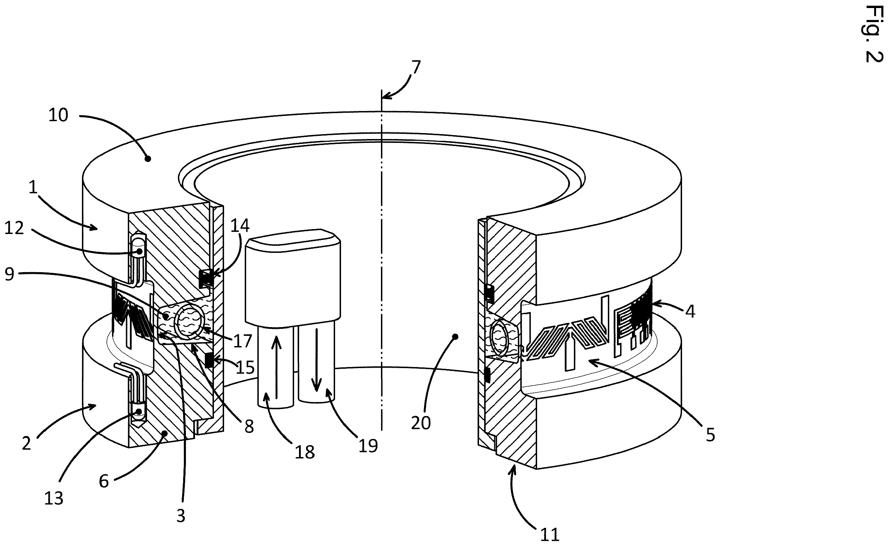

Figur 2 zeigt eine teilgeschnittene erfindungsgemäße ringförmige Kraftmesseinrichtung. Dabei entspricht der prinzipielle Aufbau der Darstellung in Figur 1 und diese Kraftmesseinrichtung weist ebenfalls einen Messkörper 6 auf, welcher einen ersten flanschartigen Teil 1 über eine rohrartige Verformungszone 3 mit einem zweiten flanschartigen Teil 2 verbindet. Der mit der Flüssigkeit 9 gefüllte Hohlraum wird durch einen nutartigen Einstich 8 von der Innenseite her gebildet. Eine zylindrische Innenwand 20 schließt den Hohlraum nach innen hin ab. Die zylindrische Innenwand 20 ist fest mit dem zweiten flanschartigen Teil 2 des Messkörpers verbunden, während sie im oberen Bereich zum ersten flanschartigen Teil leicht beabstandet ist und so dessen ungehinderte Bewegung zulässt.

Die Abdichtung des Flüssigkeitsgefüllten Hohlraums erfolgt über einen unteren Dichtring 15 und eine obere flexible Dichtung 14. Der flexible Dichtring 14 setzt der Relativbewegung zwischen dem ersten und zweiten flanschartigen Teil nur einen geringen Widerstand entgegen. Außerdem erlaubt er den Druckausgleich zwischen Flüssigkeit 9 und der umgebenden Atmosphäre. Die Innenwand 20 ist dabei vorzugsweise aus einem gut wärmeleitenden Material hergestellt und unterstützt so den Wärmetransport zwischen den beiden flanschartigen Teilen 1 und 2.

In dem gezeigten Ausführungsbeispiel ist der Flüssigkeitsgefüllte Hohlraum von einer Kühlmittelleitung 17 durchzogen, welche von einer nicht dargestellten externen Temperiereinrichtung über den Kühlmittelzulauf 18 und den Kühlmittelablauf 19 mit Kühlmittel versorgt wird. Die Aufgabe dieser Kühlmittelleitung 17 ist es, die Verlustleistung der Dehnmessstreifen 4 über dies Flüssigkeit 9 aufzunehmen und abzuführen und so eine höhere Speisespannung zu ermöglichen und/oder die Temperatur der Kraftmesseinrichtung entgegen äußeren Einflüssen auf einem konstanten, vorgegebenen Niveau zu halten.

Alternativ zu der hier dargestellten Ausführungsform könnte auch das im Hohlraum befindliche Flüssigkeit 9 insgesamt durch eine externe Temperiereinrichtung umgewälzt werden, jedoch würden bereits geringe Druckschwankungen in der Flüssigkeit 9 das Messergebnis beeinflussen. Aus diesem Grund ist die Kühlmittelleitung 17 in diesem Ausführungsbeispiel separiert und besteht bevorzugt aus einem festen, unnachgiebigen und gut wärmeleitenden Material, zum Beispiel Stahl, Aluminium oder Messing. Wärme von den Dehnmessstreifen 4 wird über die Flüssigkeit 9 an die Kühlmittelleitung 17 übertragen.

Das in Figur 2 dargestellte Ausführungsbeispiel besitzt außerdem zwei Temperatursensoren 12 und 13, welche die Temperaturen des ersten und zweiten flanschartigen Teils unabhängig voneinander erfassen. Das mit diesen Temperatursensoren ermittelte Temperaturniveau, die Temperaturunterschiedswerte zwischen dem erstem und zweiten flanschartigen Teil 1,2 sowie der Charakter des zeitlichen Verlaufs der Temperaturänderungen (zum Beispiel abrupt, allmählich oder wellenförmig) können von einer vorzugsweise softwaregesteuerten Auswerteeinheit dazu verwendet werden, die aktuelle Messunsicherheit zu bestimmen, die Temperiereinrichtung zu regeln und ggf. die Messwerte auf der Basis von Erfahrungswerten oder Rechenmodellen automatisch zu korrigieren und so die Messunsicherheit zu verringern. Ist der Temperaturunterschiedswert in der Regel vernachlässigbar gering, kann auch ein einzelner Temperatursensor 12 an der Kraftmesseinrichtung ausreichend sein, um die Messunsicherheit zu beurteilen und/oder zu verringern. Der ermittelte Temperaturwert kann außerdem verwendet werden, um die Temperiereinrichtung zu steuern.

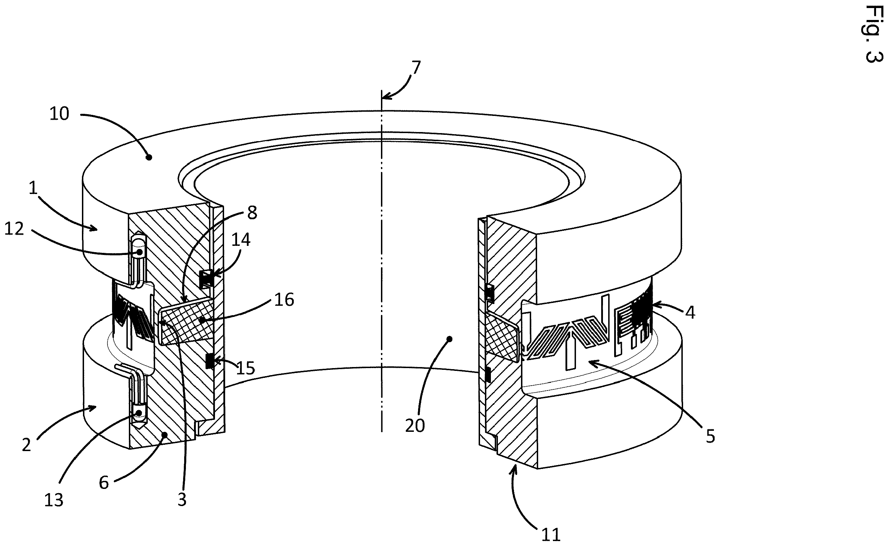

Figur 3 zeigt eine weitere erfindungsgemäße Kraftmesseinrichtung. Diese weist einen sehr ähnlichen Aufbau wie die in Figur 2 beschriebene Kraftmesseinrichtung auf, verzichtet jedoch auf eine aktive Kühlung. Stattdessen ist der durch den nutartigen Einstich 8 gebildete Flüssigkeitsgefüllte Hohlraum weitgehend von einem festen Wärmekoppelelement 16 ausgefüllt. Dieses besteht vorzugsweise aus einem gut wärmeleitenden Material, zum Beispiel Kupfer. Das Wärmekoppelelement 16 ist in diesem Ausführungsbeispiel fest mit dem zweiten flanschartigen Teil 2 des Messkörpers 6 verbunden. Gegenüber der rohrartigen Verformungszone 3 und dem ersten flanschartigen Teil 1 ist das Wärmekoppelelement 16 jedoch beabstandet, um eine ungehinderte Bewegung dieser Teile des Messkörpers 6 zu ermöglichen. Der sich dadurch zwischen dem Wärmekoppelelement 16 und den Wandungen des Messkörpers 6 ergebende Spalt ist mit der Flüssigkeit 9 gefüllt, welches über freie Konvektion und Wärmeleitung einen Temperaturausgleich zwischen dem Wärmekoppelelement 16 und diesen Teilen des Messkörpers 6 vereinfacht. Dieses passive System kann die Effizienz der Wärmeübertragung zwischen der Verformungszone 3 und den flanschartigen Teilen 1,2 beziehungsweise zwischen erstem und zweitem flanschartigen Teil deutlich erhöhen.

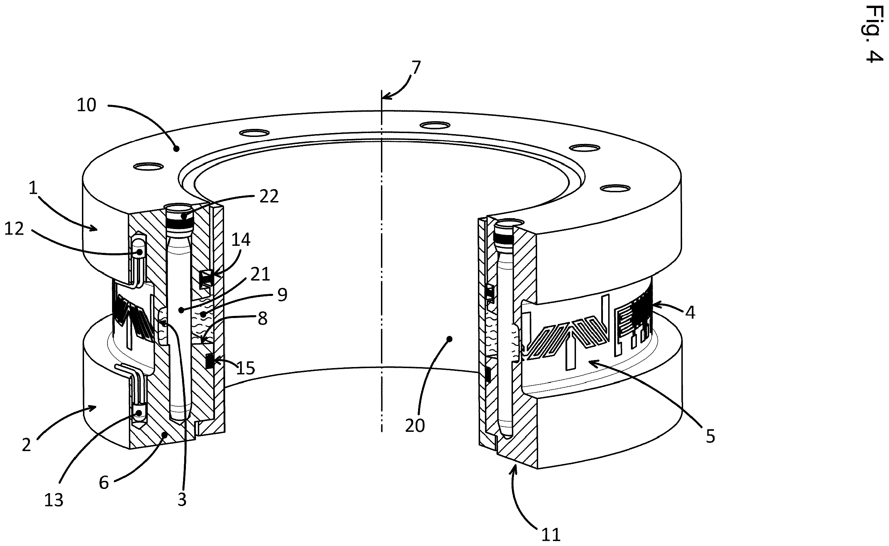

Figur 4 zeigt eine weitere Ausführungsform der Erfindung, bei der die Funktion des Wärmekoppelelements 16 aus Figur 3 von einem Wärmerohr 21 übernommen wird. Das Wärmerohr 21 ist dabei in eine Bohrung im Bereich des zweiten flanschartigen Teils 2 fest eingepasst und ragt durch den mit einer Flüssigkeit 9 gefüllten Hohlraum im Bereich des nutartigen Einstichs 8 in eine ebenfalls Flüssigkeitsgefüllte Bohrung im Bereich des ersten flanschartigen Teils 1 hinein. Diese Bohrung ist etwas größer als der Durchmesser des Wärmerohrs, um eine ungehinderte Bewegung des ersten flanschartigen Teils 1 zu ermöglichen. Die Wärmeübertragung erfolgt über die Flüssigkeit 9, welches sich im Spalt zwischen Wärmerohr 21 und Bohrungswandung befindet. Nach oben hin ist die Bohrung über einen Dichtstopfen 22 abgedichtet. Dieser Aufbau hat den Vorteil, dass ein wesentlich schnellerer Temperaturausgleich von der Verformungszone zu den beiden Anschlussflächen und/oder zwischen den beiden Anschlussflächen stattfinden kann.

## Patentansprüche

1. Kraftmesseinrichtung zur ein- oder mehrachsigen Erfassung einwirkender Kräfte und Momente bestehend aus einem ersten flanschartigen Teil (1), über den die zu messenden Kräfte eingeleitet werden, einem zweiten flanschartigen Teil (2), über den die eingeleiteten Kräfte aufgenommen und abgeleitet werden, und eine diese beiden Teile verbindende rohrartig ausgebildete Verformungszone (3), über die alle auf den ersten flanschartigen Teil (1) einwirkenden Zug-, Druck-, Torsions- und Scherkräfte an den zweiten flanschartigen Teil (2) weitergeleitet werden, wobei die Verformungszone (3) mit Verformungsaufnehmern (4) versehen ist, wobei in einem durch den ersten und zweiten flanschartigen Teil (1, 2) sowie die Verformungszone (3) gebildeten Messkörper (6) ein mit einer Flüssigkeit (9) gefüllter Hohlraum ausgebildet ist, der hinter der Verformungszone (3) angeordnet ist, wobei die Verformungszone (3) mindestens teilweise mit der Flüssigkeit (9) in flächigem Kontakt und die Flüssigkeit (9) mit beiden flanschartigen Teilen (1, 2) in thermischen Kontakt steht, und wobei die Kraftmesseinrichtung dazu ausgebildet ist, über die Flüssigkeit (9) Wärme wenigstens von der Verformungszone (3) abzuführen,
**dadurch gekennzeichnet, dass** die Kraftmesseinrichtung ringförmig ausgebildet ist, und dass der Hohlraum durch einen nutartigen Einstich (8) von der Innenseite der Verformungszone (3) her gebildet ist, wobei eine zylindrische Innenwand (20) den Hohlraum nach innen hin abschließt.

2. Kraftmesseinrichtung nach einem der vorangegangenen Ansprüche, **dadurch gekennzeichnet, dass** sie Mittel zur Kühlung der Flüssigkeit (9) aufweist.

3. Kraftmesseinrichtung nach Anspruch 2, **dadurch gekennzeichnet, dass** die Flüssigkeit (9) in Berührung mit einem Wärmekoppelelement (16) steht, über das Wärme von der Flüssigkeit (9) abführbar ist.

4. Kraftmesseinrichtung nach dem vorangegangenen Anspruch, **dadurch gekennzeichnet, dass** dieses Wärmekoppelelement (16) ein Wärmerohr ist.

5. Kraftmesseinrichtung nach einem der vorangegangenen Ansprüche 2 bis 4, **dadurch gekennzeichnet, dass** die Flüssigkeit (9) von einer externen Temperiereinrichtung temperiert und umgewälzt wird.

6. Kraftmesseinrichtung nach einem der vorangegangenen Ansprüche 2 bis 5, **dadurch gekennzeichnet, dass** die Flüssigkeit (9) von einer Kühlmittelleitung (17) durchzogen ist und das darin fließende Kühlmittel von einer externen Temperiereinrichtung temperiert und umgewälzt wird.

7. Kraftmesseinrichtung nach einem der vorangegangenen Ansprüche, **dadurch gekennzeichnet, dass** die äußere Fläche der rohrartigen Verformungszone (3) als Applikationsfläche (5) für Verformungsaufnehmer (4) dient, und dass die der äußeren Applikationsfläche (5) gegenüberliegende innere Wand der rohrartigen Verformungszone (3) mit der Flüssigkeit (9) beaufschlagt ist.

8. Kraftmesseinrichtung nach einem der vorangegangenen Ansprüche, **dadurch gekennzeichnet, dass** die Kraftmesseinrichtung in ihrem ersten flanschartigen Teil (1) und in ihrem zweiten flanschartigen Teil (2) jeweils mindestens einen Temperatursensor (12,13) besitzt und der von einer Auswerteeinheit ermittelte Temperaturunterschiedswert für eine Korrektur der ermittelten Kraftwerte und/oder zur Steuerung einer die Kraftmesseinrichtung oder Teile davon temperierenden Vorrichtung herangezogen wird.

## Claims

1. A force measuring device for the single-axis or multi-axis acquisition of acting forces and moments, comprising a first flange-like part (1), via which the forces to be measured are introduced, a second flange-like part (2), via which the introduced forces are absorbed and dissipated, and a deformation zone (3) with a tube-like configuration connecting these two parts, via which all tensile, compressive, torsional and shear forces acting on the first flange-like part (1) are transferred to the second flange-like part (2), wherein the deformation zone (3) is provided with deformation transducers (4), wherein a cavity, which is filled with a liquid (9) and disposed behind the deformation zone (3), is formed in a measuring body (6) formed by the first and second flange-like parts (1, 2) and the deformation zone (3), wherein the deformation zone (3) is at least partially in planar contact with the liquid (9), and the liquid (9) is in thermal contact with the two flange-like parts (1, 2), and wherein the force measuring device is configured for dissipating heat away at least from the deformation zone (3) via the liquid (9), **characterized in that** the force measuring device has an annular configuration, and that the cavity is formed by a groove-like recess (8) from the inside of the deformation zone (3), wherein a cylindrical inner wall (20) seals the cavity towards the inside.

2. The force measuring device according to any one of the preceding claims, **characterized in that** it has means for cooling the liquid (9).

3. The force measuring device according to claim 2, **characterized in that** the liquid (9) is in contact with a heat coupling element (16) via which heat can be dissipated from the liquid (9).

4. The force measuring device according to the preceding claim, **characterized in that** this heat coupling element (16) is a heat pipe.

5. The force measuring device according to any one of the preceding claims 2 to 4, **characterized in that** the liquid (9) is temperature-regulated and circulated by an external temperature-regulating device.

6. The force measuring device according to any one of the preceding claims 2 to 5, **characterized in that** a coolant line (17) runs through the liquid (9), and the coolant flowing therein is temperature-regulated and circulated by an external temperature-regulating device.

7. The force measuring device according to any one of the preceding claims, **characterized in that** the outer surface of the tube-like deformation zone (3) serves as an application surface (5) for deformation transducers (4), and that the liquid (9) is applied to the inner wall of the tube-like deformation zone (3) opposite the outer application surface (5).

8. The force measuring device according to any one of the preceding claims, **characterized in that** the force measuring device has at least one temperature sensor (12, 13) in each of its first flange-like part (1) and its second flange-like part (2), and the temperature difference value determined by an evaluation unit is used for correcting the determined force values and/or for controlling a device that temperature-regulates the force measuring device or parts thereof.

## Revendications

1. Dispositif de mesure de force pour la détection uni- ou multiaxiale de forces et de moments agissantes, se composant d'une première partie (1) de type bride par le biais de laquelle les forces à mesurer sont appliquées, d'une deuxième partie (2) de type bride par le biais de laquelle les forces appliquées sont absorbées et dissipées, et d'une zone de déformation (3) de type tube qui relie ces deux parties et par le biais de laquelle l'ensemble des forces de traction, de pression, de torsion et de cisaillement agissant sur la première partie (1) de type bride sont transmises à la deuxième partie (2) de type bride, dans lequel la zone de déformation (3) est pourvue de capteurs de déformation (4), dans lequel une cavité remplie d'un liquide (9) est formée dans un corps de mesure (6) formé par les première et deuxième parties (1, 2) de type bride ainsi que par la zone de déformation (3), laquelle cavité est disposée derrière la zone de déformation (3), dans lequel la zone de déformation (3) est au moins en partie en contact de surface avec le liquide (9) et le liquide (9) est en contact thermique avec les deux parties (1, 2) de type bride, et dans lequel le dispositif de mesure de force est conçu pour dissiper de la chaleur au moins de la zone de déformation (3) par l'intermédiaire du liquide (9), **caractérisé par le fait que** le dispositif de mesure de force est conçu en forme d'anneau et que la cavité est formée par un évidement en forme de rainure (8) depuis la face intérieure de la zone de déformation (3), dans lequel une paroi intérieure cylindrique (20) ferme la cavité vers l'intérieur.

2. Dispositif de mesure de force selon la revendication 1, **caractérisé par le fait qu'**il comprend des moyens de refroidissement du fluide (9).

3. Dispositif de mesure de force selon la revendication 2, **caractérisé par le fait que** le liquide (9) est en contact avec un élément de couplage thermique (16) par l'intermédiaire duquel de la chaleur peut être dissipée du liquide (9).

4. Dispositif de mesure de force selon la revendication précédente, **caractérisé par le fait que** cet élément de couplage thermique (16) est un caloduc.

5. Dispositif de mesure de force selon l'une quelconque des revendications précédentes 2 à 4, **caractérisé par le fait que** le liquide (9) est régulé en température et mis en circulation par un dispositif de régulation de température externe.

6. Dispositif de mesure de force selon l'une quelconque des revendications précédentes 2 à 5, **caractérisé par le fait que** le liquide (9) est traversé par une conduite de fluide de refroidissement (17) et que le fluide de refroidissement qui y circule est régulé en température et mis en circulation par un dispositif de régulation de température externe.

7. Dispositif de mesure de force selon l'une quelconque des revendications précédentes, **caractérisé par le fait que** la surface extérieure de la zone de déformation (3) de type tube sert de surface d'application (5) pour des capteurs de déformation (4), et que la paroi intérieure de la zone de déformation (3) de type tube, qui est opposée à la surface extérieure d'application (5) est soumise au liquide (9).

8. Dispositif de mesure de force selon l'une quelconque des revendications précédentes, **caractérisé par le fait que** le dispositif de mesure de force présente respectivement au moins un capteur de température (12, 13) dans sa première partie (1) de type bride et dans sa deuxième partie (2)de type bride et que la valeur de différence de température déterminée par une unité d'évaluation est utilisée pour une correction des valeurs de force déterminées et/ou pour commander un dispositif régulant en température le dispositif de mesure de force ou des parties de celui-ci.
